**Europäisches Patentamt**

**European Patent Office**

**Office européen des brevets**

(11) Veröffentlichungsnummer: **0 040 786**
**B1**

(12) **EUROPÄISCHE PATENTSCHRIFT**

(45) Veröffentlichungstag der Patentschrift:
03.10.84

(51) Int. Cl.³: **H 02 H  7/12**, G 05 F  1/58,
**H 02 M  3/335**

(21) Anmeldenummer: **81103808.2**

(22) Anmeldetag: **18.05.81**

(54) Schaltungsanordnung zur Begrenzung und Regelung des Kollektorstromes des Stellgliedtransistors eines Schaltnetzteiles.

(30) Priorität: **23.05.80  DE 3019906**

(43) Veröffentlichungstag der Anmeldung:
**02.12.81 Patentblatt 81/48**

(45) Bekanntmachung des Hinweises auf die Patenterteilung:
**03.10.84 Patentblatt 84/40**

(84) Benannte Vertragsstaaten:
**AT BE CH FR IT LI LU NL SE**

(56) Entgegenhaltungen:
**DE - A - 2 928 227**
**DE - B - 2 416 985**

**FUNKSCHAU, Nr. 4, 1978 K. RISCHMÜLLER "Ein wirtschaftliches 400-W-Netzteil" Seiten 135 bis 137**

(73) Patentinhaber: **Siemens Aktiengesellschaft, Berlin und München Wittelsbacherplatz 2, D-8000 München 2 (DE)**

(72) Erfinder: **Schmidtner, Erich, Frühlingsanger 2, D-8000 München 45 (DE)**
Erfinder: **Kosorcic, Ratko, Dipl.-Ing., Putzbrunnerstrasse 123, D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Schaltungsanordnung zur Begrenzung und Regelung des Kollektorstroms des Stellgliedtransistors eines Schaltnetzteiles unter Verwendung eines integrierten Strom- und Spannungsreglerbausteins, der einen Pulsbreitenmodulator, eine Referenzspannungsquelle, je einen Operationsverstärker für Strom- und Spannungsregelung, deren Ausgangssignale die Pulsbreite steuern, eine Abschalteinrichtung für die Ausgangssignale und zwei den Stellgliedtransistor schaltende duale Ausgänge besitzt, wobei in Reihe zum Stellgliedtransistor ein Stromtransformator zur Lieferung des Strom-Istwertes liegt.

Bei Schaltnetzteilen ist der Schutz der Schalttransistoren vor Überstrom von grösster Wichtigkeit. Zur Regelung werden dabei an sich bekannte integrierte Reglerbausteine verwendet, die eine kombinierte Spannungs- und Stromregelung mit Hilfe von Operationsverstärkern und eines Pulsphasenmodulators gestatten. Dieser Reglerbaustein wird üblicherweise so betrieben, dass unter Zuhilfenahme eines Stromtransformators der zur Stromregelung vorgesehene Operationsverstärker zur Messwerterfassung langsamer Stromänderungen verwendet wird. Für schnelle Stromänderungen oder sehr steile Stromspitzen wird üblicherweise der Eingang einer ebenfalls im integrierten Reglerbaustein vorhandenen Abschalteinrichtung oder der Operationsverstärker für die Spannungsregelung benutzt. Plötzlich auftretende Stromspitzen bewirken zwar ein gleichzeitiges Sperren der Ausgänge des Reglerbausteines, der zurückgehende Strom ermöglicht aber ein sofortiges Wiedereinschalten, wobei es zu erheblichen Oszillationsvorgängen im Kollektorstromkreis kommen kann. Die RCD-Schutzbeschaltung des Schalttransistors verliert dabei an Wirksamkeit. Der Schaltungsvorgang ist weitgehend unkontrolliert und kann zur Zerstörung des Schalttransistors führen. Bei langsamen Stromänderungen treten die bereits beschriebenen Vorgänge im wesentlichen dann auf, wenn der Übergang von der Spannungs- in die Stromregelung erfolgt. Beide Stromerfassungsformen sind aber grundsätzlich erforderlich.

Aus der DE-B2-2 461 985 ist eine Schaltungsanordnung für ein Schaltnetzteil bekannt, bei der es ebenfalls um die Begrenzung des Kollektorstroms des Stellgliedtransistors geht. Die Messschaltung zur Spannungsregelung besteht aus einem primärseitig vom Laststrom durchflossenen Stromwandler, der sekundärseitig an einem Bürdenwiderstand eine Gleichrichterdiode und einen Kondensator zur Unterdrückung von Einschaltstromspitzen angeschlossen ist und die über eine Auswertschaltung das Tastverhältnis eines Pulsgebers in einer Steuerschaltung steuert. Im Anschluss an die Strommesseinrichtung ist ein Schmitt-Trigger vorgesehen, dessen Ausgang auf ein Gatter führt, an dessen Eingang ausser dem Pulsgeber eine Regelschaltung anliegt, die beim Ansteigen des Stromes über die Schwelle des Schmitt-Triggers das Gatter und damit den folgenden Leistungstransistor sperrt. Ein weiteres Gatter ist dafür vorgesehen, dass eine Freigabe des zuerst genannten Gatters erst nach Ablauf eines vorgegebenen Pulsprogramms erfolgen kann. Bei dieser Anordnung handelt es sich jedoch um eine Strombegrenzungsschaltung von Stromnetzteilen mit diskreten Bauteilen.

Aufgabe der vorliegenden Erfindung ist es, eine Schaltungsanordnung zur Begrenzung und Regelung des Kollektorstromes des Stellgliedtransistors eines Schaltnetzteiles unter Verwendung eines integrierten Strom- und Spannungsreglerbausteines zu schaffen, die auch nach dem einmal erfolgten Ansprechen der Überstromschwelle und dem damit verbundenen Abschalten ein Wiedereinschalten des Stellgliedes innerhalb einer Periode des Schalttaktes verhindert.

Zur Lösung dieser Aufgabe wird gemäss der Erfindung die Schaltungsanordnung derart ausgebildet, dass dem Stromtransformator sekundärseitig eine Reihenschaltung aus Diode und veränderlichem Ohmschen Widerstand sowie die Reihenschaltung einer Diode und eines Kondensators parallelgeschaltet ist, dass zwei bistabile Schalter vorgesehen sind, dass der eine Eingang des ersten bistabilen Schalters mit der Referenzspannungsquelle und der andere Eingang mit dem Ausgang des integrierten Reglerbausteins verbunden ist, dass der Ausgang des ersten bistabilen Schalters mit dem einen Eingang des Operationsverstärkers für die Stromregelung und der andere Eingang mit dem Abgriff eines ersten parallel zum Kondensator liegenden Spannungsteilers verbunden ist, dass der eine Eingang des zweiten bistabilen Schalters mit dem Abgriff des variablen Ohmschen Widerstandes und der andere Eingang mit einer weiteren Referenzspannung verbunden ist und dass der Ausgang des zweiten bistabilen Schalters an den Eingang der Abschalteinrichtung des integrierten Reglers geführt ist.

Durch diese Massnahmen wird der Augenblickswert des Stromes durch den Schalttransistor erfasst und damit eine wirksame und sichere Stromregelung eingeleitet. Zusätzlich wird verhindert, dass nach einmal erfolgtem Ansprechen der Überstromschwelle innerhalb der üblichen Einschaltphase ein mehrfacher Schaltvorgang und eine eventuelle Frequenzhalbierung mit nachfolgendem unkontrolliertem Schaltverhalten des Stelltransistors eintritt.

Die Regelanordnung lässt sich auch derart ausbilden, dass der andere Eingang des zweiten bistabilen Schalters mit dem Abgriff eines parallel zum Schaltnetzteilausgang liegenden zweiten Spannungsteilers verbunden ist.

Durch diese Massnahme erhält man eine schwimmende Vorspannung, wodurch eine Rückläufigkeit des Laststromes mit der Spannung bis auf 10% des Nennstromes erreicht werden kann.

Um einen sicheren Anlauf der Schaltung, der in der Strombegrenzung erfolgen muss, zu ermöglichen, kann auch der andere Abgriff des zweiten Spannungsteilers über einen Ohmschen Widerstand zugleich mit einer Hilfsspannung verbunden sein.

Der Ausgang des ersten bistabilen Schalters lässt sich auch mit dem Abgriff eines dritten parallel zum Schaltnetzteilausgang liegenden Spannungsteilers verbinden. Dadurch kann die Zeitdauer innerhalb einer Periode, in der ein Wiedereinschalten verhindert werden soll, definiert festgelegt werden.

Vorteilhaft ist es auch, den Ausgang des zweiten bistabilen Schalters mit dem Abgriff eines zwischen einer Hilfsgleichspannung und Masse liegenden vierten Spannungsteilers zu verbinden.

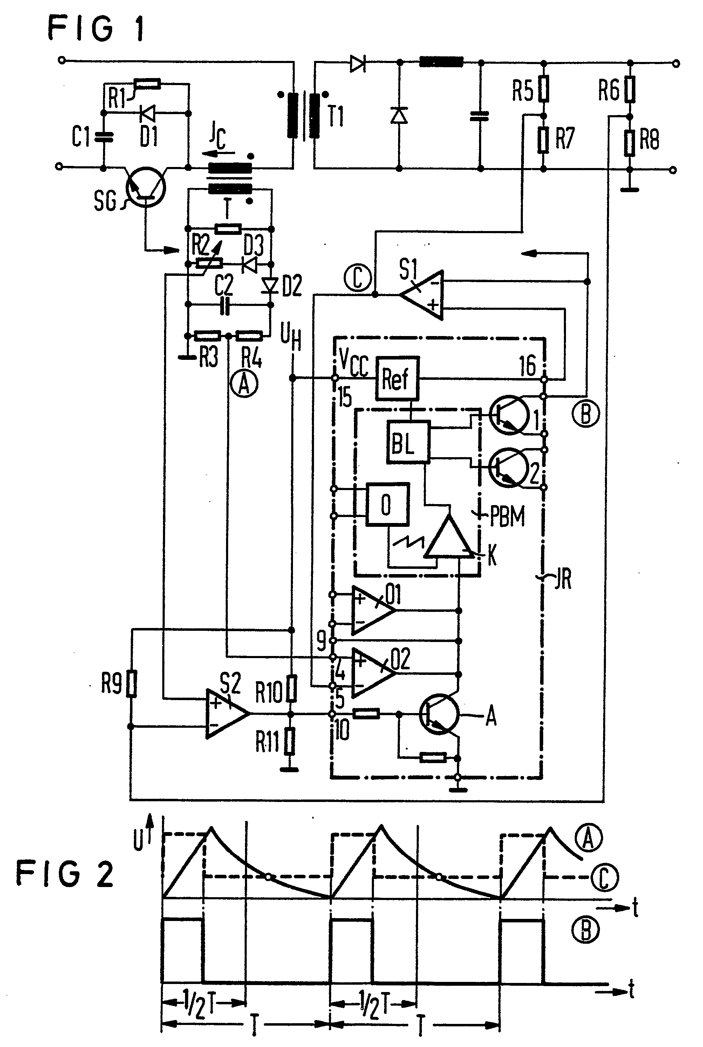

Für den bistabilen Schalter können dabei Operationsverstärker verwendet werden. Anhand des Ausführungsbeispieles nach der Fig. 1 sowie des Diagramms nach Fig. 2 wird die Erfindung näher erläutert.

Fig. 1 zeigt dabei das Schaltnetzteil mit dem Reglerbaustein,

Fig. 2 ein Diagramm für die wesentlichen Spannungsverläufe.

Das Schaltnetzteil enthält das als Transistor ausgebildete Stellglied SG, wobei über der Emitterkollektorstrecke des Stelltransistors die aus Kondensator C1, Ohmschem Widerstand R1 und Diode D1 bestehende sogenannte RCD-Schutzschaltung liegt. Die Funktionsweise dieser Schutzschaltung ist bekannt und beispielsweise in der Zeitschrift «Valvo Berichte» Bd. 18, Heft 1/2, auf Seite 150 im Zusammenhang mit Bild 11 beschrieben.

In Reihe zum Stellglied SG und zur Primärwicklung des den Gleichrichterteil vom Schaltreglerteil abtrennenden Transformators T1 liegt die Primärwicklung des linearen Stromtransformators T. Der Sekundärwicklung dieses Stromtransformators T ist eine Reihenschaltung aus Diode D3 und variablem Ohmschem Widerstand R2 parallelgeschaltet sowie ein Einweggleichrichter, bestehend aus der Diode D2 und dem Ladekondensator C2. Parallel zum Ladekondensator C2 liegt der erste Ohmsche Spannungsteiler R3, R4.

Der Reglerbaustein, der beispielsweise ein Baustein unter der Typenbezeichnung SG3524 von Silicon General und Texas Instruments sein kann, besteht im wesentlichen aus einer Referenzspannungsquelle REF, einem Pulsbreitenmodulator PBM, der sich wiederum aus einem Sägezahnoszillator O, einem Komparator K und einer internen Bausteinlogik BL zusammensetzt, sowie einem Operationsverstärker 01 zur Spannungsregelung, einem Operationsverstärker 02 zur Stromregelung und einer Abschalteinrichtung A, die im wesentlichen ein Schalttransistor ist. Der Reglerbaustein hat zwei duale Ausgänge 1 und 2.

Am Ausgang des Schaltnetzteils liegt ein zweiter Spannungsteiler R6, R8 und ein dritter Spannungsteiler R5, R7.

Ein erster bistabiler Schalter S1, der im Ausführungsbeispiel als Operationsverstärker ausgebildet ist, ist mit seinem einen Eingang mit der Referenzspannungsquelle REF des Reglerbausteins und mit seinem anderen Eingang mit dem Ausgang 1 des Reglerbausteins verbunden. Der Ausgang des ersten bistabilen Schalters S1 ist an den einen Eingang des Operationsverstärkers für die Stromregelung O2 des Reglerbausteins IR geführt. Der andere Eingang dieses Operationsverstärkers O2 ist mit dem Abgriff des ersten Spannungsteilers R3, R4 verbunden.

Ein zweiter bistabiler Schalter S2 führt ausgangsseitig an die Abschalteinrichtung A während der eine Eingang mit dem Abgriff des zweiten Spannungsteilers R6, R8 und der andere Eingang über den Widerstand R9 mit einer Hilfsspannung UH verbunden ist. Gleichzeitig wird einem vierten Spannungsteiler R10, R11, der mit seinem Abgriff am Ausgang des zweiten bistabilen Schalters liegt, die Hilfsspannung UH zugeführt.

Die Funktion der Schaltung ist wie folgt. Der Kollektorstrom IC des Stellgliedes SG fliesst über den linearen Stromtransformator T und erzeugt dabei auf der Sekundärseite ein unmittelbares Abbild desselben. Überschreitet der Kollektorstrom den durch den Widerstand R2 eingestellten Augenblickswert, so schaltet der Schalter S2 auf einen positiven Spannungspegel und löst unmittelbar über den Anschluss 10 die Abschaltung des Ausgangs 1 aus, wobei dieser auf positives Potential schaltet. Der Ausgang des Schalters S1 schaltet daraufhin den Eingang 5 des Operationsverstärkers für die Stromregelung auf ein gegenüber dem Eingang 4 niedrigeres Potential. Der Eingang 4 folgt nun aufgrund des jetzt abgeschalteten Kollektorstromes dem Entladeverlauf des Kondensators C2 und bleibt aufgrund der Entladezeitkonstante gegenüber dem Eingang länger positiver als das maximal mögliche Tastverhältnis von 48% andauern kann. Dies bewirkt, dass während dieser Phase ein erneutes Einschalten verhindert wird. Erst der aufgrund der festgelegten Frequenz folgende natürliche Einschaltvorgang und die damit verbundene erneute Strommessung entscheidet, ob eine frühere oder spätere Abschaltung als vorher notwendig wird.

Die Vorgänge sind im Impulsdiagramm nach Fig. 2 zu sehen. Mit B ist dabei der geregelte Taktimpuls am Ausgang 1 des Reglers bezeichnet. Am Ausgang des ersten bistabilen Schalters S1 stellt sich dann der Spannungsverlauf C ein, während der Spannungsverlauf am Ausgang des Einweggleichrichters mit A bezeichnet ist. Die Kurve A zeigt dabei deutlich den linearen Stromanstieg bis zur Abschaltung durch den bistabilen Schalter S2 und die sich daran anschliessende Entladungskurve. Solange die Spannung am Abgriff des ersten Spannungsteilers R3, R4 positiver ist als die Spannung am Ausgang des ersten bistabilen Schalters S1, bleibt das Stellglied gesperrt und damit das Schaltnetzteil abgeschaltet. Ein Wiedereinschalten kann erst in der darauffolgenden Periode stattfinden. Durch den dritten Spannungsteiler R5, R7 wird der Schnittpunkt zwischen dem abklingenden Ast der Kurve A und der Kurve C festgelegt. Dadurch wird bewirkt, dass während dieser Phase ein erneutes Einschalten verhindert wird. Erst der aufgrund der festgelegten Frequenz folgende natürliche Einschaltvorgang und die damit verbundene erneute Strommessung entscheidet, ob eine frühere oder spätere Abschaltung als vorher notwendig wird. Die Verwendung des zweiten Spannungsteilers R6, R8 auf der Ausgangsspannungsseite kann eine Rückläufigkeit des Laststromes mit der Spannung bis auf 10% des Nennstromes bewirken, da die Vorspannung am zweiten bistabilen Schalter S2 dadurch schwimmend wird, wodurch sich der Wiedereinschaltpunkt verschiebt. Der Widerstand R9 ist notwendig, um den Anlauf der Schaltung, der in Strombegrenzung erfolgt, zu ermöglichen. Eine besondere Anlaufschaltung ist nicht erforderlich.

Die Vorteile dieser Schaltung bestehen im wesentlichen darin, dass die Messung und Übertragung des Augenblickswertes des Kollektorstromes des Regeltransistors unverzögert an den Eingang der Abschalteinrichtung des Bausteins erfolgt, wobei ein sehr scharfer Einsatzpunkt für die Strombegrenzung bzw. Regelung erreicht und sofort über die bausteininterne Logik BL die unmittelbare Abschaltung ausgelöst wird.

Die Beschaltung der Eingänge 4 und 5 des Operationsverstärkers O2 für die Stromregelung mit der beschriebenen, aus dem Diagramm nach Fig. 2 ersichtlichen Sperrfunktion, verhindert Mehrfachschaltvorgänge des Bausteins und damit des Schalttransistors, eventuelles Halbieren der Schaltfrequenz und dadurch höhere Sicherheit. Der Anlauf kann dabei wegen der hohen Kurzschlusssicherheit über die Stromregelung erfolgen.

**Patentansprüche**

1. Schaltungsanordnung zur Begrenzung und Regelung des Kollektorstroms des Stellgliedtransistors (SG) eines Schaltnetzteiles unter Verwendung eines integrierten Strom- und Spannungsreglerbausteins (IR) der einen Pulsbreitenmodulator (PBM), eine Referenzspannungsquelle (REF), je einen Operationsverstärker für Strom- und Spannungsregelung (O1, O2), deren Ausgangssignale die Pulsbreite steuern, eine Abschalteinrichtung (A) für die Ausgangssignale und zwei den Stellgliedtransistor (SG) schaltende duale Ausgänge (1, 2) besitzt, wobei in Reihe zum Stellgliedtransistor (SG) ein Stromtransformator (T) zur Lieferung des Strom-Istwertes liegt, dadurch gekennzeichnet, dass dem Stromtransformator (T) sekundärseitig eine Reihenschaltung aus Diode (D3) und veränderlichem Ohmschem Widerstand (R2) sowie die Reihenschaltung einer Diode (D2) und eines Kondensators (C2) parallelgeschaltet ist, dass zwei bistabile Schalter (S1, S2) vorgesehen sind, dass der eine Eingang des ersten bistabilen Schalters (S1) mit der Referenzspannungsquelle (REF) und der andere Eingang mit dem Ausgang des integrierten Reglerbausteins verbunden ist, dass der Ausgang des ersten bistabilen Schalters (S1) mit dem einen Eingang des Operationsverstärkers (O2) für die Stromregelung und der andere Eingang mit dem Abgriff eines ersten parallel zum Kondensator (C2) liegenden Spannungsteilers (R3, R4) verbunden ist, dass der eine Eingang des zweiten bistabilen Schalters (S2) mit dem Abgriff des variablen Ohmschen Widerstandes (R2) und der andere Eingang mit einer weiteren Referenzspannung verbunden ist und dass der Ausgang des zweiten bistabilen Schalters (S2) an den Eingang der Abschalteinrichtung des integrierten Reglers (IR) geführt ist.

2. Schaltungsanordnung nach Anspruch 1, dadurch gekennzeichnet, dass der andere Eingang des zweiten bistabilen Schalters (S2) mit dem Abgriff eines parallel zum Schaltnetzteilausgang liegenden zweiten Spannungsteilers (R6, R8) verbunden ist.

3. Schaltungsanordnung nach Anspruch 2, dadurch gekennzeichnet, dass der andere Abgriff des zweiten Spannungsteilers (R6, R8) über einen Ohmschen Widerstand (R9) zugleich mit einer Hilfsgleichspannung (UH) verbunden ist.

4. Schaltungsanordnung nach einem der vorhergehenden Ansprüche, dadurch gekennzeichnet, dass der Ausgang des ersten bistabilen Schalters (S1) mit dem Abgriff eines dritten, parallel zum Schaltnetzteilausgang liegenden Spannungsteilers (R5, R7) verbunden ist.

5. Schaltungsanordnung nach einem der vorhergehenden Ansprüche, dadurch gekennzeichnet, dass der Ausgang des zweiten bistabilen Schalters (S2) mit dem Abgriff eines zwischen einer Hilfsgleichspannung (UH) und Masse liegenden vierten Spannungsteilers (R10, R11) verbunden ist.

6. Schaltungsanordnung nach einem der vorhergehenden Ansprüche, dadurch gekennzeichnet, dass die beiden bistabilen Schalter (S1, S2) Operationsverstärker sind.

**Claims**

1. A circuit arrangement for limiting and controlling the collector current of the final control element transistor (SG) of a main supply employing an integrated current and voltage controller module (IR) containing a pulse width modulator (PBM), a reference voltage source (REF), respective operational amplifiers (O1, O2) whose output signals control the pulse width for current and voltage control, and a cut-off device (A) for the output signals via two dual outputs (1, 2) which switch the final control element transistor (SG), where a current transformer (T) which serves to supply the actual current value is arranged in series to the final control element transistor (SG), characterised in that at the secondary end both a series combination of a diode (D3) and a variable resistor (R2) and a series combination of a diode (D2) and a capacitor (C2) are connected parallel to the current transformer (T), that two bistable switches (S1, S2) are provided, that the one input of the first bistable switch (S1) is connected to the reference voltage source (REF) and the other input is connected to the output of the integrated controller module, that the output of the first bistable switch (S1) is connected to the one input of the operational amplifier (O2) for current control whose other input is connected to the tap of a first voltage divider (R3, R4) arranged parallel to the capacitor (C2), that the one input of the second bistable switch (S2) is connected to the tap of the variable resistor (R2) and the other input is connected to a further reference voltage, and that the output of the second bistable switch (S2) is led to the input of the cut-of device of the integrated controller (IR).

2. A circuit arrangement as claimed in claim 1, characterised in that the other input of the second bistable switch (S2) is connected to the tap of a second voltage divider (R6, R8) which is arranged parallel to the main supply output.

3. A circuit arrangement as claimed in claim 2, characterised in that the other tap of the second voltage divider (R6, R8) is also connected to an auxiliary d.c. voltage (UH) via a resistor (R9).

4. A circuit arrangement as claimed in one of the preceding claims, characterised in that the output of the first bistable switch (S1) is connected to the tap of a third voltage divider (R5, R7) arranged parallel to the main supply output.

5. A circuit arrangement as claimed in one of the preceding claims, characterised in that the output of the second bistable switch (S2) is connected to the tap of the fourth voltage divider (R10, R11) arranged between an auxiliary d.c. voltage (UH) and a referential potential point (earth).

6. A circuit arrangement as claimed in one of the preceding claims, characterised in that the two bistable switches (S1, S2) are operational amplifiers.

**Revendications**

1. Montage pour limiter et régler le courant de collecteur du transistor (SG) de l'unité de réglage d'une partie d'un réseau de commutation, moyennant l'utilisation d'un module de régulation de courant et de tension (IR) qui possède un modulateur d'impulsions en durée (PVM), une source de tension de référence (REF), des amplificateurs opérationnels respectifs pour la régulation du courant et de la tension (O1, O2), dont les signaux de sortie commandent la durée des impulsions, un dispositif de débranchement (A) pour les signaux de sortie et deux sorties binaires (1, 2) commutant le transistor (SG) de l'organe de réglage, un transformateur d'intensité (T) servant à délivrer la valeur réelle du courant étant monté en série avec le transistor (SG) de l'organe de réglage, caractérisé par le fait qu'un circuit série formé d'une diode (D3) et d'une résistance ohmique variable (R2) ainsi que le circuit série formé d'une diode (D2) et d'un condensateur (C1) sont branchés en parallèle avec le transformateur d'intensité (T) sur le côté secondaire, qu'il est prévu deux commutateurs bistables (S1, S2), qu'une entrée du premier commutateur bistable (S1) est reliée à la tension de référence (REF) et que l'autre entrée est reliée à la sortie du module de régulation intégré, que la sortie du premier commutateur bistable (S1) est reliée à une entrée de l'amplificateur opérationnel (O2) pour la régulation du courant et que l'autre entrée est reliée à la prise d'un premier diviseur de tension (R3, R4) monté en parallèle avec le condensateur (C2), qu'une entrée du second commutateur bistable (S2) est reliée à la prise de la résistance ohmique variable (R2) et que l'autre entrée est reliée à une autre entrée de référence et que la sortie du second commutateur bistable (S1) est raccordée à l'entrée du dispositif de débranchement du régulateur intégré (IR).

2. Montage suivant la revendication 1, caractérisé par le fait que l'autre entrée du second commutateur bistable (S2) est reliée à la prise d'un second diviseur de tension (R6, R8) branché en parallèle avec la sortie de la partie du réseau de commutation.

3. Montage selon la revendication 2, caractérisé par le fait que l'autre prise du second diviseur de tension (R6, R8) est reliée simultanément par l'intermédiaire d'une résistance ohmique (R9) à une tension continue auxiliaire (UH).

4. Montage selon l'une des revendications précédentes, caractérisé par le fait que la sortie du premier commutateur bistable (S1) est reliée à la prise d'un troisième diviseur de tension (R5, R7), monté en parallèle avec la sortie de la partie du réseau de commutation.

5. Montage suivant l'une des revendications précédentes, caractérisé par le fait que la sortie du second commutateur bistable (S2) est reliée à la prise d'un quatrième diviseur de tension (R10, R11) raccordée entre une tension continue auxiliaire (UH) et la masse.

6. Montage suivant l'une des revendications précédentes, caractérisé par le fait que les deux commutateurs bistables (S1, S2) sont des amplificateurs opérationnels.

# FIG 1

# FIG 2